# EUROPEAN PATENT APPLICATION

(11) **EP 0 887 727 A2**
(43) Date of publication of application: **30.12.1998**
(21) Application number: 98401546.1
(22) Date of filing: 24.06.1998
(51) Int. Cl.: G06F 7/52

(54) **Multiplying circuit**

(30) Priority: 24.06.1997 JP 166727/97
(71) Applicant: SONY CORPORATION, Tokyo (JP)
(72) Inventor: Onuma, Koichi, Shinagawa-ku, Tokyo (JP)
(74) Representative: Thévenet, Jean-Bruno

(57) **Abstract**

A multiplying circuit consists of a partial product adding circuit (10) and a final stage adding circuit (20), and serves to extract, as an operation result, high-order p bits (p < m + n) of a multiplication result obtained through multiplication of a binary multiplicand of m bits by a binary multiplier of n bits, wherein at least one of the partial product adding circuit (10) and the final stage adding circuit (20) comprises a sum generating circuit (11, 21) to execute addition of bits related directly to the multiplication result of the high-order p bits, and a carry generating circuit (12, 22) to execute only generation of a carry relative to low-order q bits (q = m + n - p). In this configuration, only the carry signal alone is needed with regard to the partial product of the low-order bits and the final stage addition, hence curtailing the number of required component elements and raising the operation speed correspondingly thereto.

## Description

### BACKGROUND OF THE INVENTION

### 1. Field of the Invention

The present invention relates to a circuit for multiplying binary numbers, and more particularly to a circuit which executes multiplication of a binary multiplicand of m bits by a binary multiplier of n bits and then extracts, as a final operation result, high-order p bits (p < m + n) in the result of such multiplication.

### 2. Description of the Related Art

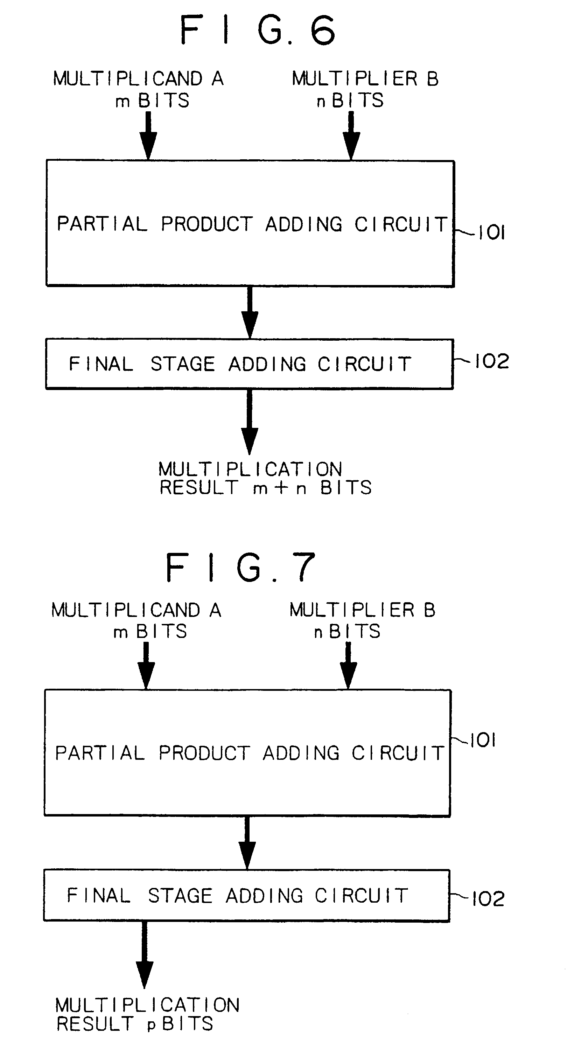

Fig. 6 shows a general configuration of a known multiplying circuit. As obvious from this diagram, a binary multiplying circuit generally consists of a partial product adding circuit 101 and a final stage adding circuit 102. The partial product adding circuit 101 serves to add a plurality of partial products obtained from the values of a multiplicand A and a multiplier B, and this circuit executes such addition by a carry save system or a Wallace tree system. A term partial product used here signifies a result obtained through multiplication of bits of a multiplicand A by those of a multiplier B.

The final stage adding circuit 102 serves to input the result obtained in the partial product adding circuit 101 and then outputs a final multiplication result A x B. This final stage adding circuit 102 consists of a carry look ahead adder or a carry select adder.

In case the multiplicand A of input data has a bit width m and the multiplier B has a bit width n, the bit width of output data obtained as a result of multiplication is m + n, i.e., the sum of the respective bit widths of the multiplicand A and the multiplier B. For example, in a multiplication of 8 bits x 8 bits, the bit width of the output data comes to 16 bits. In this case, the final stage adding circuit 102 needs to consist of an adder corresponding to the bit width of the output data.

In any special multiplication such as graphics processing, there may be some cases where entire bits of a multiplication result are not exactly required. For example, in a multiplication of 8 bits x 8 bits, there exists a case where only high-order 8 bits of a 16-bit multiplication result are required. It has been customary in the prior art heretofore that such special operation is executed by means of a standard multiplying circuit shown in Fig. 6, and only high-order p bits (p < m + n) of the multiplication result outputted from the final stage adding circuit 102 are extracted to be used, as shown in Fig. 7.

As a result of multiplying a multiplicand A of m bits by a multiplier B of n bits, there are obtained output data having a bit width of m + n. And when the data required as a final operation result are high-order p bits, it is not exactly necessary to add the entire bits of the partial product in the final stage adding circuit 102. Nevertheless, the ordinary multiplying circuit is so formed as to add the entire bits of the partial product, so that component elements of the circuit relevant to any bits unnecessary for addition are surplus, and the operation speed is lowered correspondingly thereto.

### SUMMARY OF THE INVENTION

It is an object of the present invention to provide a multiplying circuit which is adapted to minimise the number of required component elements therein and is capable of realizing a higher operation speed.

According to one aspect of the present invention, there is provided a multiplying circuit consisting of a partial product adding circuit and a final stage adding circuit, and serving to extract, as an operation result, high-order p bits (p < m + n) of a multiplication result obtained through multiplication of a binary multiplicand of m bits by a binary multiplier of n bits, wherein at least one of the partial product adding circuit and the final stage adding circuit comprises a sum generating circuit to execute addition of bits related directly to the multiplication result of the high-order p bits, and a carry generating circuit to execute only generation of a carry relative to low-order q bits (q = m + n - p).

As a result of multiplying a multiplicand A of m bits by a multiplier B of n bits in the multiplying circuit of the above configuration, data having a bit width of m + n are obtained. However, when required data are only high-order p bits, it is not exactly necessary to add the entire bits of the partial product. Therefore, only the high-order p bits are added while merely a carry is generated with regard to low-order q bits (q = m + n - p), and then a multiplication is executed with addition of the carry of the low-order q bits to the high-order p bits. Consequently, only the carry signal alone is needed with regard to the partial product of the low-order bits and the final stage addition, hence curtailing the number of required component elements and raising the operation speed correspondingly thereto.

The above and other features and advantages of the present invention will become apparent from the following description which will be given with reference to the illustrative accompanying drawings.

### BRIEF DESCRIPTION OF THE DRAWINGS

Fig. 1 is a block diagram showing an embodiment of the present invention;
Figs. 2A and 2B are conceptual diagrams each representing a multiplication of 4 bits x 4 bits;
Fig. 3 is a block diagram showing an exemplary configuration of an ordinary multiplying circuit according to the prior art;
Fig. 4 is a block diagram showing an exemplary configuration of a multiplying circuit according to the embodiment;
Figs. 5A, 5B and 5C are block diagrams showing an exemplary configuration of a half adder, a full adder and a carry generator, respectively;
Fig. 6 is a block diagram showing a general configuration of a multiplying circuit; and
Fig. 7 is a block diagram showing a configuration of a multiplying circuit used to execute a special operation.

### DESCRIPTION OF THE PREFERRED EMBODIMENT

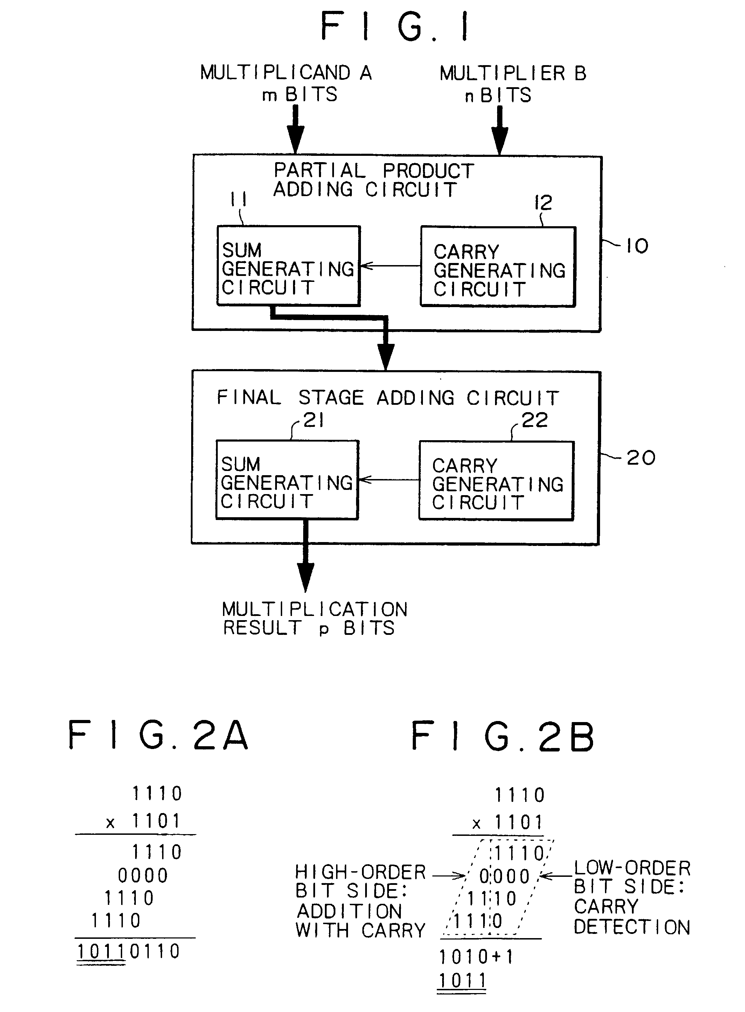

Hereinafter a preferred embodiment of the present invention will be described in detail with reference to the accompanying drawings. Fig. 1 is a block diagram showing an exemplary embodiment of the invention.

A multiplying circuit represented by this embodiment extracts, in multiplying a binary multiplicand A of m bits of input data by a binary multiplier B of n bits, high-order p bits (p < m + n) of output data of m + n bits as a final multiplication result. In its fundamental circuit configuration consisting of a partial product adding circuit 10 and a final stage adding circuit 20, the partial product adding circuit 10 comprises a sum generating circuit 11 and a carry generating circuit 12, and similarly the final stage adding circuit 20 comprises a sum generating circuit 21 and a carry generating circuit 22.

Each of the sum generating circuits 11 and 21 executes addition of bits related directly to the multiplication result of high-order bits required finally and, when there is a carry from low-order bits in the carry generating circuit 12 or 22, adds the carry to the high-order bits. Each of the carry generating circuits 12 and 22 executes only generation of a carry with regard to low-order bits which are not added.

In an example of Fig. 2A representing a multiplication of 4 bits by 4 bits, the partial products of entire bits are added, and high-order four bits of such addition result are obtained as a multiplication result. As described in connection with the prior art, this example corresponds to a case of executing a calculation by means of a standard multiplying circuit, and then extracting and using only required high-order p bits (four bits in this example) as a final operation result.

In another case of multiplying a multiplicand A of m bits by a multiplier B of n bits, data having a bit width of m + n are obtained as a multiplication result. However, when required data are high-order p bits (p < m + n), it is not exactly necessary to add the entire bits of the partial product. Therefore, in an example of Fig. 2B, only the high-order four bits of the partial product are added while only generation of a carry is executed with regard to the low-order four bits, and a multiplication result is obtained by adding the carry of the low-order four bits to the high-order four bits.

Now an explanation will be given on a comparison between the configuration of the ordinary multiplying circuit based on the concept of Fig. 2A and the configuration of the multiplying circuit of this embodiment based on the concept of Fig. 2B.

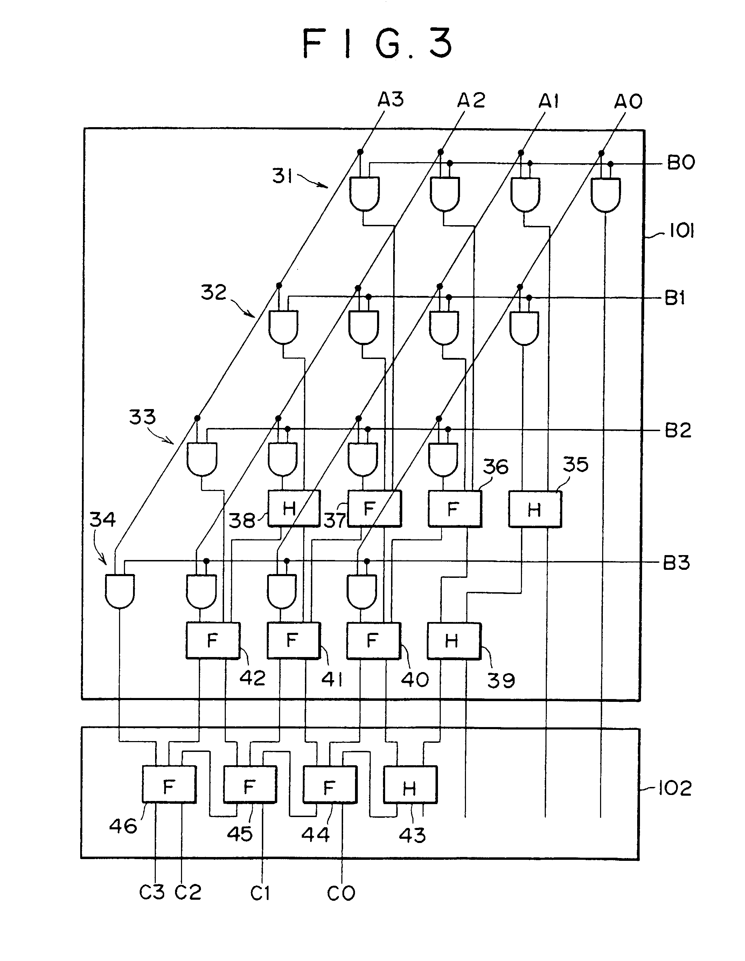

Fig. 3 shows an exemplary configuration of the ordinary multiplying circuit based on the concept of Fig. 2A. A partial product adding circuit 101 adopting a carry save system consists of sixteen (4 x 4) AND gates, five full adders and three half adders. The sixteen AND gates constitute four-stage gate rows 31 to 34 each composed of four gates.

In such gate rows 31 to 34, least-significant-bit data B0 of the multiplier B is fed as one input to each of the four AND gates in the first-stage gate row 31, second-bit data B1 of the multiplier B is fed as one input to each of the four AND gates in the second-stage gate row 32, third-bit data B2 of the multiplier B is fed as one input to each of the four AND gates in the third-stage gate row 33, and fourth-bit data B3 of the multiplier B is fed as one input to each of the four AND gates in the fourth-stage gate row 34, respectively.

Data A0, A1, A2 and A3 of the individual bits of the multiplicand A are fed as other inputs to the first-bit, second-bit, third-bit and fourth-bit AND gates in the gate rows 31 to 34, respectively. And the output of the first-bit AND gate in the first-stage gate row 31 is supplied directly as least-significant-bit data of the partial product adding circuit 101 to the final stage adding circuit 102.

In the first-stage gate row 31, the output of the second-bit AND gate is fed as one addition input to a half adder 35, while the outputs of the third-bit and fourth-bit AND gates are fed as carry inputs to full adders 36 and 37. In the second-stage gate row 32, the output of the first-bit AND gate is fed as another addition input to the half adder 35, while the outputs of the second-bit and third-bit AND gates are fed as one addition input to the full adders 36 and 37, respectively. And the output of the fourth-bit AND gate is fed as one addition input to the half adder 38.

In the third-stage gate row 33, the outputs of the first-bit and second-bit AND gates are fed as other addition inputs to the full adders 36 and 37; the output of the third-bit AND gate is fed as another addition input to the half adder 38; and the output of the fourth-bit AND gate is fed as another addition input to the full adder 42. The addition output of the half adder 35 is supplied as second-bit data of the partial product adding circuit 101 to the final stage adding circuit 102, and the carry output thereof is fed as one addition input to the half adder 39.

The addition output of the full adder 36 is fed as another addition input to the half adder 39. while the carry output thereof is fed as a carry input to the full adder 40. The addition output of the full adder 37 is fed as one addition input to the full adder 40, while the carry output thereof is fed as a carry input to the full adder 41. The addition output of the half adder 38 is fed as one addition input to the full adder 41, while the carry output thereof is fed as a carry input to the full adder 42.

In the fourth-stage gate row 34, the outputs of the first-bit to third-bit AND gates are fed as other addition inputs to the full adders 40 to 42, respectively. The addition outputs and the carry outputs of the half adder 39 and the full adders 40 to 42 are supplied as the third-bit to seventh-bit data of the partial product adding circuit 101 to the final-stage adding circuit 102. And the output of the fourth-bit AND gate in the fourth-stage gate row 34 is supplied as the most significant bit data of the partial product adding circuit 101 to the final-stage adding circuit 102.

The final-stage adding circuit 102 comprises a half adder 43 where two addition inputs are fourth-bit data of the partial product adding circuit 101 (carry output of the half adder 39 and addition output of the full adder 40); a full adder 44 where two addition inputs are fifth-bit data (carry output of the full adder 40 and addition output of the full adder 41) and its carry input is the carry output of the half adder 43; a full adder 45 where two addition inputs are sixth-bit data (carry output of the full adder 41 and addition output of the full adder 42) and its carry input is the carry output of the full adder 44; and a full adder 46 where two addition inputs are the seventh-bit data (carry output of the full adder 42 and output of the fourth-bit AND gate in the fourth-stage gate row 34) and its carry input is the carry output of the full adder 45.

In the final stage adding circuit 102, when high-order four bits of its eight-bit multiplication output are delivered as a final operation result, an addition output of the full adder 44 is delivered as first-bit data C0, an addition output of the full adder 45 as second-bit data C1, an addition output of the full adder 46 as third-bit data C2, and a carry output of the full adder 46 is delivered as fourth-bit data C3, respectively.

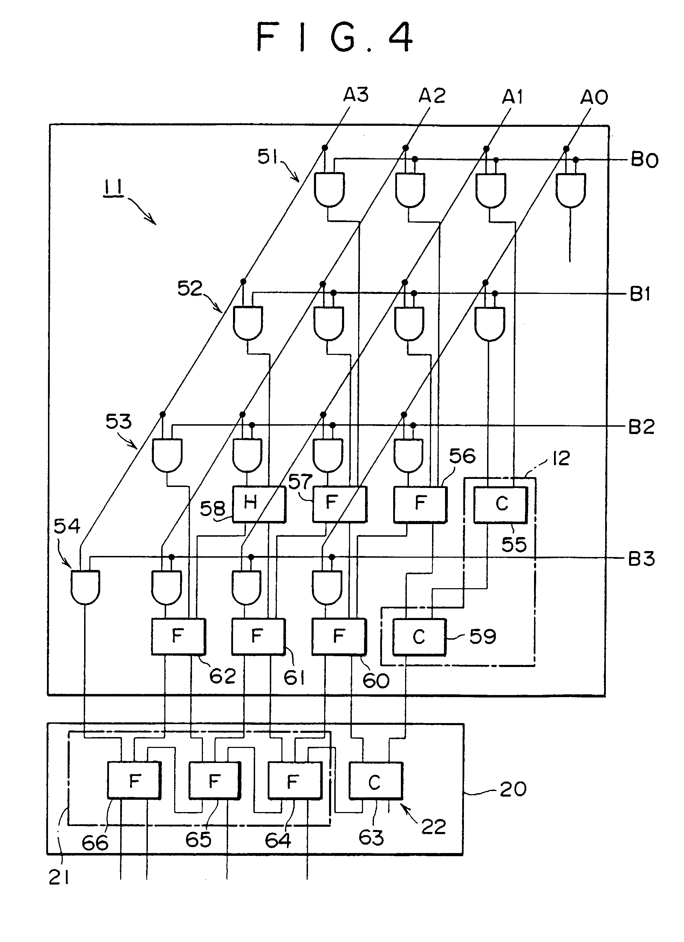

Next, Fig. 4 shows an exemplary configuration of the multiplying circuit of the embodiment based on the concept of Fig. 2B. A partial product adding circuit 10 adopting a carry save system consists of sixteen (4 x 4) AND gates, five full adders, one half adder and two carry generators. The sixteen AND gates constitute four-stage gate rows 51 to 54 each composed of four gates.

In such gate rows 51 to 54, least-significant-bit data B0 of the multiplier B is fed as one input to each of the four AND gates in the first-stage gate row 51, second-bit data B1 of the multiplier B is fed as one input to each of the four AND gates in the second-stage gate row 52, third-bit data B2 of the multiplier B is fed as one input to each of the four AND gates in the third-stage gate row 53, and fourth-bit data B3 of the multiplier B is fed as one input to each of the four AND gates in the fourth-stage gate row 54, respectively.

Data A0, A1, A2 and A3 of the individual bits of the multiplicand A are fed as other inputs to the first-bit, second-bit, third-bit and fourth-bit AND gates in the gate rows 51 to 54, respectively. However, the output of the first-bit AND gate in the first-stage gate row 51 is not delivered to the outside.

In the first-stage gate row 51, the output of the second-bit AND gate is fed as one input to a carry generator 55, while the outputs of the third-bit and fourth-bit AND gates are fed as carry inputs to full adders 56 and 57. In the second-stage gate row 52, the output of the first-bit AND gate is fed as another input to the carry generator 55, while the outputs of the second-bit and third-bit AND gates are fed as one addition input to the full adders 56 and 57, respectively. And the output of the fourth-bit AND gate is fed as one addition input to the half adder 58.

In the third-stage gate row 53, the outputs of the first-bit and second-bit AND gates are fed as other addition inputs to the full adders 56 and 57; the output of the third-bit AND gate is fed as another addition input to the half adder 58; and the output of the fourth-bit AND gate is fed as another addition input to the full adder 62. The carry output of the carry generator 55 is fed as one input to a carry generator 59.

The addition output of the full adder 56 is fed as another input to the carry generator 59, and the carry output thereof is fed as a carry input to the full adder 60. The addition output of the full adder 57 is fed as one addition input to the full adder 60, while the carry output thereof is fed as a carry input to the full adder 61. The addition output of the half adder 58 is fed as one addition input to the full adder 61, while the carry output thereof is fed as a carry input to the full adder 62.

In the fourth-stage gate row 54, the outputs of the first-bit to third-bit AND gates are fed as other addition inputs to the full adders 60 to 62, respectively. The output of the carry generator 59, the addition outputs and the carry outputs of the full adders 60 to 62 are supplied as the fourth-bit to seventh-bit data of the partial product adding circuit 10 to the final stage adding circuit 20. And the output of the fourth-bit AND gate in the fourth-stage gate row 54 is supplied as the most significant bit data of the partial product adding circuit 10 to the final stage adding circuit 20.

In the partial product adding circuit 10 of the above configuration, the four-stage gate rows 51 to 54, five full adders 56, 57, 60 to 62 and one half adder 48 constitute a sum generating circuit 11 which executes a partial product addition with regard to the bits related directly to a multiplication result of the high-order four bits required finally. And the two carry generators 55 and 59 constitute a carry generating circuit 12 which executes only generation of a carry with regard to the low-order bits not used for partial product addition.

The final stage adding circuit 20 comprises a carry generator 63 where two inputs are fourth-bit data of the partial product adding circuit 10 (output of the carry generator 59 and addition output of the full adder 60); a full adder 64 where two inputs are fifth-bit data (carry output of the full adder 60 and addition output of the full adder 61) and its carry input is the carry output of the carry generator 63; a full adder 65 where two inputs are sixth-bit data (carry output of the full adder 61 and addition output of the full adder 62) and its carry input is the carry output of the full adder 64; and a full adder 66 where two inputs are the seventh-bit data (carry output of the full adder 62 and output of the fourth-bit AND gate in the fourth-stage gate row 54) and its carry input is the carry output of the full adder 65.

In the final-stage adding circuit 20 of the above configuration, the three full adders 64 to 66 constitute a sum generating circuit 21 which executes addition with regard to the bits related directly to a multiplication result of the high-order four bits required finally. And one carry generator 63 constitutes a carry generating circuit 22 which executes only generation of a carry with regard to the low-order bits not used for addition. And an addition output of the full adder 64 is delivered as first-bit data C0, an addition output of the full adder 65 as second-bit data C1, an addition output of the full adder 66 as third-bit data C2, and a carry output of the full adder 66 is delivered as fourth-bit data C3, respectively.

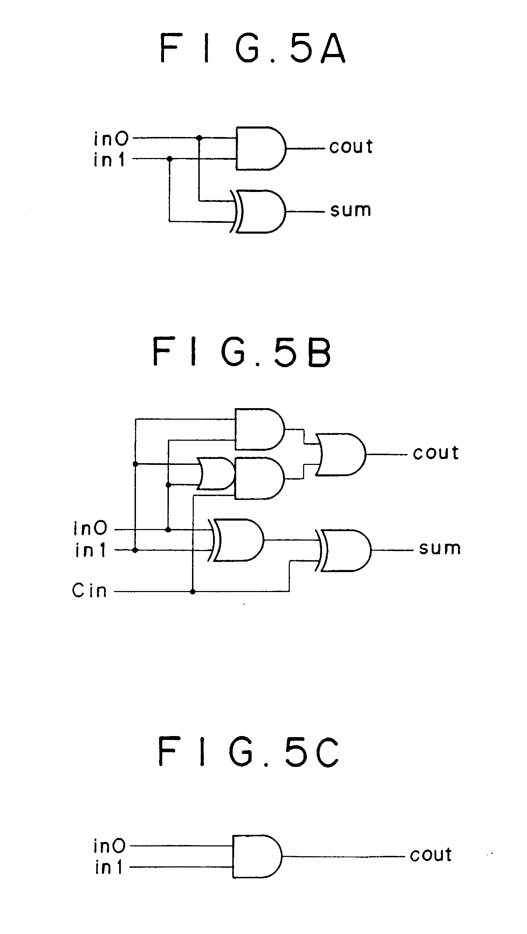

In the ordinary multiplying circuit of the prior art and the multiplying circuit of the embodiment mentioned above, a half adder shown in Fig. 5A and a full adder shown in Fig. 5B are employed respectively. And further a carry generator shown in Fig. 5C is employed in the multiplying circuit of the embodiment.

Now an explanation will be given on a comparison between the configuration of the ordinary multiplying circuit shown in Fig. 3 and the configuration of the multiplying circuit of the embodiment shown in Fig. 4. This embodiment is so composed that, in executing a multiplication of 4 bits x 4 bits, only high-order four bits of the partial product are added while merely generation of a carry is executed with regard to low-order four bits, and a final multiplication result is obtained by adding the carry of the low-order four bits to the high-order four bits. Therefore, differing from ordinary circuit where half adders 35, 39 and 43 are employed for low-order bits, it is possible in the embodiment to use carry generators 55, 59 and 63 instead.

As obvious from Fig. 5, a half adder is composed of an AND gate and an EX-OR gate, whereas a carry generator can be composed of one AND gate alone. Consequently, due to adoption of the configuration of the embodiment in, e.g., a multiplying circuit for calculation of 4 bits x 4 bits, the circuit configuration can be simplified correspondingly to elimination of three EX-OR gates. It is a matter of course that such simplification of the circuit configuration is rendered greater in accordance with an increase of the bit width of a multiplicand and a multiplier. Moreover, since the circuit configuration can thus be simplified, it becomes possible to attain a wide reduction of the number of required component elements constituting the circuit, hence curtailing the power consumption and realizing a higher operation speed.

In the above embodiment, each of the partial product adding circuit 10 and the final stage adding circuit 20 consists of a sum generating circuit and a carry generating circuit. However, the configuration is not limited to such example alone, and it is possible to constitute either the partial product adding circuit 10 or the final stage adding circuit 20 by a sum generating circuit and a carry generating circuit.

Further in the above embodiment, when extracting high-order four bits as a final multiplication result in a multiplication of 4 bits x 4 bits, the sum generating circuit 21 in the final stage adding circuit 20 is composed of an adder having a bit width of four bits, but the bit width need not exactly be equal to the number of high-order bits. For example, when extracting high-order eight bits as a final multiplication result in a multiplication of 8 bits x 8 bits, the sum generating circuit 21 may be composed of an adder having a bit width of nine bits, and generation of a carry may be executed with regard to low-order seven bits. In this case also, the number of required component elements can be reduced.

Although the present invention has been described hereinabove with reference to the preferred embodiment thereof, it is to be understood that the invention is not limited to such embodiment alone, and a variety of other changes and modifications will be apparent to those skilled in the art without departing from the spirit of the invention.

The scope of the invention, therefore, is to be determined solely by the appended claims.

## Claims

1. A multiplying circuit consisting of a partial product adding circuit (10) and a final stage adding circuit (20), and serving to extract, as an operation result, high-order p bits (p < m + n) of a multiplication result obtained through multiplication of a binary multiplicand of m bits by a binary multiplier of n bits,
wherein at least one of said partial product adding circuit (10) and said final stage adding circuit (20) comprises a sum generating circuit (11, 21) to execute addition of bits related directly to the multiplication result of the high-order p bits, and a carry generating circuit (12, 22) to execute only generation of a carry relative to low-order q bits (q = m + n - p).

2. The multiplying circuit according to claim 1, wherein said sum generating circuit (11, 21) consists of an adder having a bit width of more than p bits.

3. The multiplying circuit according to claim 1, wherein said sum generating circuit (11, 21) adds a carry signal, which is given from said carry generating circuit (12, 22), to the high-order bits.
